# EUROPEAN PATENT APPLICATION

(11) **EP 4 446 626 A2**
(43) Date of publication of application: **16.10.2024**
(21) Application number: 24184493.5
(22) Date of filing: 17.03.2017
(51) Int. Cl.: F16J 15/12

(54) **ARRANGEMENTS FOR PROVIDING A SUBSTANTIALLY FLUID-TIGHT SEAL**

(30) Priority: 17.03.2016 GB 201604578; 30.06.2016 GB 201611507
(62) Divisional of application: 17718393.6
(71) Applicant: Galvgard (U.K.) Limited, Dereham, NR20 3TG (GB)
(72) Inventor: HUNT, Andrew, Wymondham, NR18 9QX (GB); HUNT, Oliver, Norwich, NR9 4LX (GB)
(74) Representative: Thoma, Maximilian Henry

(57) **Abstract**

A gasket arrangement for providing a substantially fluid-tight seal between at least two corresponding mating surfaces, comprising a first member and a second member, the second member being arranged at least in part to provide a fluid-tight seal about the first member; wherein the second member is capable of deforming the first member while maintaining the fluid-tight seal when compressed.

## Description

The present invention relates to arrangements for providing a substantially fluid-tight seal. More specifically, a gasket arrangement for providing a fluid-tight seal between two mating surfaces is described. A panel for a sectional tank is also described.

Aspects and embodiments of the present invention are set out in the appended claims. These and other aspects and embodiments of the invention are also described herein.

According to a first aspect there is provided a gasket arrangement for a mating surface, comprising: a first member and a second member, the second member being arranged at least in part to provide a fluid-tight seal about the first member; wherein the second member is capable of deforming the first member while maintaining the fluid-tight seal when compressed; such that the gasket arrangement is capable of providing a substantially fluid-tight seal between the mating surface and a corresponding mating surface.

Thus, described herein is a gasket arrangement for providing a substantially fluid-tight seal between at least two corresponding mating surfaces in a sectional tank. Preferably, the arrangement comprises a first member and a second member, with the second member being arranged at least in part to provide a fluid-tight seal about the first member so as to inhibit fluid contact by fluid from within the sectional tank with the first member. Preferably, the second member is capable of deforming the first member while maintaining the fluid-tight seal when compressed.

By arranging the first member on the mating surface to be at least in part sealed by the second member, undesired movement of the first member may be inhibited during transit. Undesired movement of the first member when located between the two mating surfaces may also be inhibited when compressed together.

Thus, there is provided a simple gasket arrangement for providing a fluid-tight seal at a joint between two surfaces, which may also protect substrates having mating surfaces from degradation through chemical attack and/or corrosion.

By arranging the second member to be capable of deforming the first member (when compressed) while maintaining a fluid-tight seal about the first member, the first member may comprise any material suitable for performing the function of a gasket (but which is not necessarily robust against contamination) because the fluid-tight seal provided by the second member may inhibit contamination of the first member (for example, against chemical reactions such as corrosion), and optionally also the substrate beneath.

Preferably, the second member is capable of being deformed so as to deform the first member while maintaining the fluid-tight seal. The first member is preferably more compressible than the second member.

In addition to the exemplary applications described herein, the gasket arrangement may also be particularly useful for joining two mating surfaces in undersea applications due to the avoidance of the need to align a gasket and/or apply a sealant 'on site' when conditions (especially if underwater) may make it difficult to provide a good seal.

The second member is preferably arranged to be applied to the mating surface as a coating. For example, the second member may be coated onto the mating surface in the form of paint, or a similar substance, which dries onto the mating surface to form the coating, which is preferably in solid form. The second member is preferably arranged to completely cover the first member when provided on a mating surface. Optionally, the second member may be arranged substantially to encapsulate the first member.

The second member preferably comprises a flexible material, which may be an elastomeric material. Preferably, the second member may comprise at least one of: a rubber, silicon, a resin, a polymer and an acrylic. Optionally, the second member may comprise at least one of the following materials: polyuria; polyurethane; a hybrid of polyuria and polyurethane and a chlorinated rubber.

The thicknesses of the first and second members may vary according to the particular application of the gasket arrangement. However, the first member preferably has a thickness less than 20 mm, and preferably a thickness of between 0.1 mm and 20 mm. The second member preferably has a thickness of less than 10mm, and preferably between 0.1 mm and 10 mm. As used herein, the term "thickness" preferably connotes the height of a member, rather than its width or length.

The first member may be arranged as a substantially elongate member, preferably having an elongate shape. Optionally, the first member may be arranged in as a strip.

The first member may comprise any material that may be compressed, preferably by at least 10% of its initial thickness. The first member preferably comprises a readily-compressible material, such as a foam-based material. Optionally, the first member may comprise at least one of: neoprene; polystyrene; polyurethane; 'soft' rubber; and cork; metal; rubber; plastic; silicon; graphite; resin; rubber; polyethylene; and PTFE. The first member may be arranged as tape, a pre-cut material or an applied bead of material, for example.

According to another aspect there is provided a surface having provided thereon a gasket arrangement as described above. At least of said surface may be arranged to be a mating surface, for example a surface arranged to be mated with another surface.

The second member is preferably arranged as a coating on at least part of the surface, preferably wherein at least part of the surface is arranged to be a mating surface. The coating preferably covers substantially the entire surface.

An exposed surface of the second member is arranged such that it does not adhere to another surface, preferably wherein it does not readily-adhere to another surface, for example wherein the exposed surface of the second member does not exhibit adhesive properties.

The first member is preferably arranged on the surface such that it is covered by the second member, preferably wherein the first member is arranged to be in direct contact with the surface. The first member may be adhered to the surface using a permanent adhesive, such that the first member cannot be removed from the surface without damaging the first member.

Optionally, the first member may be encapsulated by the second member, which second member may therefore be arranged to be in direct contact with the surface, preferably as a coating that covers the entire surface.

The first member may be arranged around at least a portion of the perimeter of the surface. Preferably, the first member is arranged around substantially the entire perimeter of the surface.

A plurality of holes may be provided through at least part of the surface for receiving securing means, for example bolts, for securing the surface to another surface having a corresponding plurality of holes.

According to another aspect there is provided a method of forming a gasket arrangement on a mating surface, comprising: arranging a first member and a second member on the mating surface, the second member being arranged at least in part to provide a fluid-tight seal about the first member; wherein the second member is capable of deforming the first member when compressed while maintaining the fluid-tight seal; such that the gasket is capable of providing a substantially fluid-tight seal between the mating surface and a corresponding mating surface.

Thus, described herein is a method of forming a gasket arrangement for providing a substantially fluid-tight seal between two corresponding mating surfaces in a sectional tank. Preferably, the first member and second member are arranged on at least one of the mating surfaces, the second member being arranged at least in part to provide a fluid-tight seal about the first member so as to inhibit fluid contact by fluid from within the sectional tank with the first member. Preferably, the second member is capable of deforming the first member when compressed while maintaining the fluid-tight seal.

Preferably, the first member is more compressible than the second member. The first member may be provided directly onto the mating surface before it is at least in part sealed by the second member. Preferably, the first member is adhered directly onto the mating surface prior to being at least in part sealed by the second member. Optionally, the first member may be adhered directly onto the mating surface using an adhesive that provides only a temporary adherence, whereby to provide a temporary bond for retaining the first member in position until at least in part sealed by the second member, for example until the coating of the second member dries, before the adhesive fails.

The second member may be arranged as a coating on the mating surface. Optionally, the second member may be arranged to cover the mating surface prior to arranging the first member on the mating surface.

According to another aspect there is provided a method of providing a substantially fluid-tight seal between two mating surfaces, comprising: providing on a first mating surface a gasket arrangement as described above; aligning the first mating surface with the second mating surface; and compressing the first mating surface and second mating surface together, such that the first member of the gasket arrangement deforms to provide a substantially fluid-tight seal between the two surfaces. In this way, the second member may act to inhibit any fluid contact with the first member.

Preferably, the method can provide a substantially fluid-tight seal between two corresponding mating surfaces in a sectional tank. The first mating surface may be secured to the second mating surface, preferably wherein the first mating surface and second mating surface each have a corresponding plurality of holes arranged to receive securing means therethrough, for example bolts, when the two mating surfaces are aligned.

According to another aspect there is provided a panel for a sectional tank, comprising a gasket arrangement or a surface as described above and/or being formed by a method as described above. The term "tank" preferably includes other types of vessels, and containers that are suitable for holding a fluid. A plurality of panels may be assembled to form a sectional tank. A panel may be a modular subunit for forming a sectional tank. A panel may be for assembly with fixings such as bolts.

The first member may be provided at or adjacent a perimeter of the panel. Preferably, the panel has a plurality of mating surfaces, wherein a first member of the gasket arrangement may be provided on each of said mating surfaces, the first member being covered by the second member of the gasket arrangement. The first member may be arranged to extend the entire length of a mating surface to be mated. The first member preferably extends along the mating surface substantially around the entire perimeter of the panel. The second member is preferably arranged to cover substantially the entire surface of the panel, said entire surface being the surface on which is provided the first member of the gasket arrangement.

According to another aspect there is provided a sectional tank comprising one or more panels as described above. While a panel for a sectional tank is herein described in detail, it should be understood that a panel for a sectional tank is simply a preferred embodiment. There may be many different applications that benefit from having a gasket arrangement as described herein, including: pipe and valves; doors and closures; matched machine parts; and modular buildings, to name but a few examples.

According to another aspect there is provided a sectional tank constructed using a plurality of panels joined together using a method as described above, preferably wherein at least one of the panels is a panel as described above.

According to another aspect there is provided a pipe having a surface as described above, preferably wherein the surface is arranged at an end of the pipe, optionally on a flanged portion.

According to another aspect there is provided a valve arrangement having a surface as described above, for example a butterfly valve for connection between two pipes.

According to another aspect there is provided a door and a doorframe arrangement comprising a surface as described above. A door is simply one example of an opening; a hatch or other similar arrangement may also have such a surface.

According to another aspect there is provided a panel for a sectional tank, the panel comprising a base member having an elastomeric coating. Optionally, the panel may be a sectional tank panel.

Preferably, the elastomer (of the elastomeric coating) is a polyurethane or a polyurea or a polyurethane/polyurea hybrid. These elastomers are particularly favourable because they combine favourable protective properties (and in particular are resilient to damage by chipping and cracking upon impact) and also display short curing times at room temperature (typically 20°C). This can be advantageous for coating prior to assembly of the panels, which in turn can permit ease of construction of a functional tank. These elastomers also demonstrate particularly good adherence to a wide variety of materials of the base member. The coating is preferably applied prior to assembly into a sectional tank. Preferably, the elastomeric coating is adhered to at least part of the base member. Preferably, the elastomeric coating has an elongation < 350% (preferably according to ASTM D12).

For protection against corrosion the coating may extend over a greater area (or region) than the area of the base member that forms, in use, the internal tank surface (e.g. of a sectional tank) when assembled. In other words, the coating may extend further than just area that forms the internal tank surface. Preferably, the coating extends over at least a face surface of the base member and at least an edge surface of the base member, and more preferably over all edge surfaces adjacent the face surface. The face surface is, preferably, the surface that will be arranged to face internally, in use, for example internal of a sectional tank formed by a plurality of said panels. Optionally, the base member may be completely encapsulated by the coating. The coating may extend over a defined portion of a surface of the base member, for example over at least one mating surface of the base member.

For ease of application and fast curing the coating may be applied by a spray application, and optionally a hot spray application.

The base member may comprise fibreglass, plastic or metal, preferably steel. Alternatively, the base member may comprise cement or concrete. The base member is preferably a non-foamed (or non-foam) material. The base member preferably comprises a substantially rigid material. Preferably, the base member is substantially homogeneously solid. Preferably, the base member is with no substantial interstitial spaces.

The panel may further comprise one or more anchor formations, where each anchor formation is partwise anchored in the coating and partwise anchored to the remainder of the base member. The one or more anchor formations may be formed of plastic or steel. The one or more anchor formations may comprise a cross-shaped (e.g. cruciform), profile.

Optionally, the coating may comprise a single layer of material. The coating may have a thickness of between 0.1 mm and 10 mm, preferably a thickness between 0.5 mm and 5 mm, and more preferably a thickness between 1 mm and 2 mm. Alternatively, the coating may comprise multiple layers of material, where the multiple layers are applied to the base member one over the other. The coating may be applied in multiple layers covering different areas of the base member. The multiple layers are preferably formed of the same elastomeric material / elastomer.

Preferably the elastomeric coating is substantially homogeneously solid. Preferably the elastomeric coating is a substantially homogeneous material. Preferably the elastomeric coating is with no substantial interstitial spaces. Preferably the elastomeric coating forms a spontaneous bond with the base member.

Thus, described herein is a panel for a sectional tank (e.g. a sectional tank panel), comprising a base member that is completely encapsulated by an elastomeric coating. Preferably, the elastomer (of the elastomeric coating) is a polyurethane or a polyurea or a polyurethane/polyurea hybrid. Preferably, the elastomeric coating comprises a spray-applied, fast-cure elastomer. When joining adjacent panels, when assembling / constructing a sectional tank on-site for example, a sealant (such as a polyurethane, silicone or poly-sulphide sealant, for example) may be used at the panel seams/overlaps and the holes for bolt penetrations, or other fastening means.

The panel may provide at least the following benefits over existing glass enamel coatings and epoxy coatings: the panel may be completely encapsulated due to the method of manufacture not requiring the (sectional) panels to be carried on hooks which can prevent application to all areas; due to the panels not needing to be heat treated and the elastomer / resin being fast-curing, the elastomeric coating can be applied to one side of the panel, and the panel then turned over (or the method of attachment changed) so as to allow application to the remaining areas; the protective coating can be applied to the edges of each panel (conventional manufacture of epoxy and glass enamel panels and the way they are produced on a production line mean that the edges may not be coated); the use of a sealant is for sealing purposes (i.e. between adjacent panels) only, not for providing corrosion protection of the panel edges as per glass enamel and epoxy coated sectional tanks; the flexible nature of the elastomeric coating mean that the panels are less susceptible to damage during transport and assembly; all of the above aspects may help to provide improved corrosion protection and extended life expectancy of the panels, and hence any structure formed by the panels, such as a sectional tank.

According to another aspect there is provided a method of coating a panel for a sectional tank, comprising: providing a base member; and providing an elastomeric coating over at least part of the base member. The coating may completely encapsulate the base member.

Preferably, the elastomeric coating is provided by applying a resin to the base member, which polymerises to form the elastomeric coating over said at least part of the base member. The resin may be applied by spraying. Optionally, the resin may be applied by hot spraying, preferably onto an unheated base member. The resin may be heated to a temperature between 65°C and 85°C. The resin may be subjected to pressure greater than atmospheric pressure, preferably greater than 10MPa, and more preferably greater than 20MPa, for example during curing (of the resin).

The resin may be applied to a first portion of the panel while the panel is held at a second portion, and wherein subsequently the resin is applied to at least the second portion while the panel is held elsewhere than the second portion.

The resin may cure to form the elastomeric coating sufficiently quickly that coated panels may be further handled after application of the resin (e.g. such that the coating is "tack-free") after less than 2 hours, preferably less than 1 hour, preferably less than 30 minutes, preferably less than 10 minutes, preferably less than 5 minutes, preferably less than 2 minutes, preferably less than 1 minute, preferably less than 30 seconds, and preferably less than 10 seconds.

Subsequent to application of the resin, a further layer of resin may be applied over the first layer. Subsequent to application of the resin, further resin may be applied to repair damage to the coating.

According to another aspect there is provided a method of producing a sectional tank panel, comprising: applying a resin to a mould for a panel, wherein the resin is such that it polymerises to form an elastomer; and casting a panel from the mould. The panel cast from the mould may comprise a concrete or cement base member having an elastomeric coating. The casting may comprise applying a cement or concrete mixture to the mould.

Preferably, the elastomer (of the elastomeric coating) is a polyurethane or a polyurea or a polyurethane/polyurea hybrid. Preferably, the resin comprises the elastomer and/or is configured (for example, contain the necessary components/ingredients) to form the elastomer when it polymerises.

One or more anchor formations may be partially embedded in the resin before the resin is polymerised. The one or more anchor formations may comprise a cross-shaped (e.g. cruciform) profile. The one or more anchor formations may comprise plastic or steel, for example.

The panel cast from the mould comprises a concrete base member having an elastomeric coating. The mould may be treated with release agent prior to applying the resin. Further resin may be applied to form a seal between two adjacent panels.

The elastomeric coating may be more deformable (e.g. compressible) than the base member. The coating is preferably arranged to cover at least part of the base member so as to protect it from exposure to any fluids, or chemicals, etc. to which it might otherwise be exposed, for example when used as a sectional tank for storage purposes.

According to another aspect there is provided a sectional tank panel produced according to the method described herein and/or a sectional tank comprising one or more panels as described herein.

According to another aspect there is also provided apparatus and/or methods substantially as herein described and illustrated in the accompanying drawings.

As used herein, the term "gasket" preferably connotes a seal that may be provided between two mated surfaces, matched machine parts or around pipe joints, for example, to prevent the escape or ingress of a fluid.

As used herein, the term "sealant" preferably connotes a material (or combination of materials) or substance used to provide a seal between two surfaces, such as a joint between two surfaces, and preferably a fluid-tight seal.

As used herein, the term "coating" preferably connotes a layer (e.g. a thin film) of a material or substance (or a covering) that may be applied to a surface of an object, preferably for protection of that surface. The coating may be an all-over coating, completely covering the surface, or it may only cover parts of the surface. Accordingly, the term "coated" preferably connotes having a coating.

As used herein, the term "member" preferably connotes a material or substance arranged to form a constituent part of a composite whole. As used herein, the term "elongate shape" preferably connotes a shape that is much longer than it is wide. As used herein, the term "strip" preferably connotes a flattened elongate shape, for example a long narrow piece or section of material.

As used herein, the term "fluid" preferably connotes liquids, gases and flowable solids, such as grains, for example.

As used herein, the term "elastomer" preferably connotes a polymer having, for example, at least one of the following properties:
- capable of reversible extension from 5-700%
- tensile yield strength at least 5 MPa, preferably at least 10 MPa
- elongation at rupture at least 10%, preferably at least 25%
- Shore hardness (D) at least 25, preferably at least 50
- capable of withstanding up to at least 70°C, preferably at least 100°C without degradation
- capable of withstanding down to at least -20°C without degradation
- capable of withstanding UV irradiation without degradation
- chemically inert
- high diffusive barrier
- capable of withstanding impacts without rupture of the surface, for example the panel may be dropped from a 1m height without significant rupture that allows ingress of fluid to the base member beneath

Any apparatus feature as described herein may also be provided as a method feature, and vice versa. As described herein, structural features may be expressed alternatively in terms of means plus function. Any, some and/or all features in one aspect may be applied to any, some and/or all other aspects, in any appropriate combination. In particular, method aspects may be applied to apparatus aspects, and vice versa. It should also be appreciated that particular combinations of the various features described and defined in any aspects can be implemented and/or supplied and/or used independently.

One or more exemplary embodiments will now be described with reference to the accompanying figures, in which similar features may be identified using similar reference numerals, and in which:
Figure 1 shows an example of a sectional tank;
Figure 2 shows an example of panel for constructing a sectional tank;
Figure 3a shows a cross-sectional view of an exemplary panel;
Figures 3b and 3c are cross-sectional views show examples of different gasket arrangements provided on part of the panel of Figure 3a;
Figure 4 shows a panel having a gasket arrangement provided thereon;
Figure 5 shows two such panels joined together;
Figure 6a shows a cross-sectional view of an exemplary panel;
Figures 6b and 6c are cross-sectional views showing examples of different arrangements of coatings provided on the panel of Figure 6a;
Figures 7a to 7c show steps in a procedure for producing a panel in a mould;
Figure 8 shows another example of a sectional tank; and
Figure 9 shows an example of a butterfly valve.

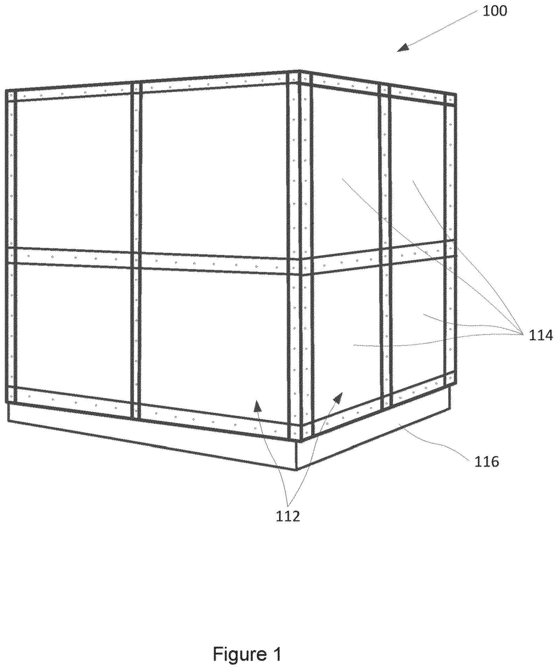

Figure 1 shows an example of a sectional tank 100 (also known as a "panel tank") having a plurality of walls 112 mounted upon a base 116 to define the shape of the sectional tank 100. The walls 112 may be constructed from a plurality of individual panels 114 that are secured together, preferably having fluid-tight joints/seals.

Conveniently, sectional tanks can be transported to an intended site in disassembled form (e.g. as individual panels or sections) and then (re)assembled on site. Sectional tanks are commonly used for storing large volumes of fluid (e.g. water), and are particularly convenient for applications where access is restricted. Once assembled, it is typically undesirable to transport a sectional tank, which may therefore be considered to be a (semi) permanent structure requiring disassembly for relocation.

A fluid-tight seal may be provided between adjacent / adjoining panels by applying a sealant to a mating surface (e.g. part of the surface along the edge or at the perimeter) of a panel and then overlaying it with a corresponding mating surface of another such panel before applying a compressive pressure to the panels to seal across the joint that has been formed. The panels may then secured together using bolts or other suitable securing means.

To avoid the sealant becoming contaminated, disturbed, damaged or removed during transport, the sealant is ideally applied onto the mating surface of the panels on site immediately before they are joined together, rather than before the panels are shipped or otherwise transported to site.

If insufficient sealant is applied, the resulting joint may not have the required integrity to provide a fluid-tight seal, for example. In addition, care must be taken to avoid sealant leaking out from between the joint, which may otherwise have the same effect of inadequate sealant being provided between the joint. Alternatively, a separate gasket component may be provided, but this requires aligning on the panel on site prior to joining the panels and may become misaligned during the joining process.

Should the integrity of a seal be inadequate, it could potentially cause a dangerous situation, depending on the location and purpose of the seal. At the very least, remedial work may need to be undertaken to repair (or even replace) the sealant, which will require time and resources.

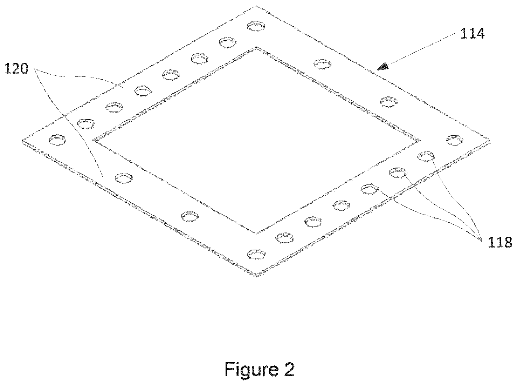

Figure 2 shows an example of a panel 114 for use in constructing a sectional tank 100, such as that shown in Figure 1.

The panel 114 has a plurality of holes 118 for receiving bolts, or other suitable fixings, for securing two such panels 114 together, or to a framework (not shown). The holes 118 are spaced along vertical and horizontal seams generally located at or towards the perimeter of each panel 114. The surface of the panel 114 immediately adjacent (e.g. on either side of) each row of holes 118 may be referred to as a mating surface 120. In use, the mating surface 120 of a panel 114 may be overlapped with the mating surface 120 of another such panel 114 to form a joint. The panels 114 can be secured together via the holes using bolts, for example, as mentioned above. The size and shape of a panel 114 may vary according to each specific application, though they are often rectangular for ease of tessellation. A panel 114 may comprise a base member, which may be made from fibreglass, plastic or metal (preferably steel), for example.

### Gasket arrangement

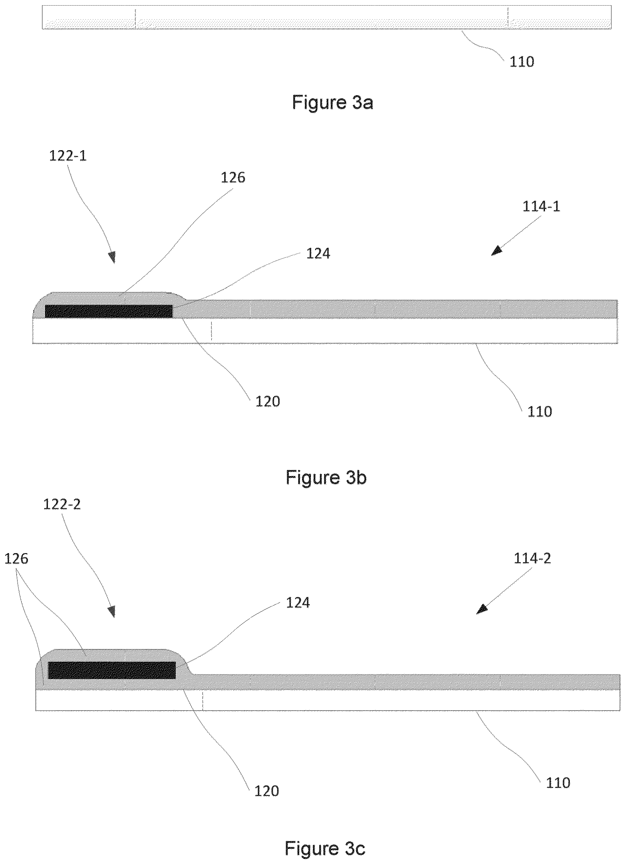

Figure 3a shows a base member 110, optionally for forming a panel 114 having a gasket arrangement as described herein.

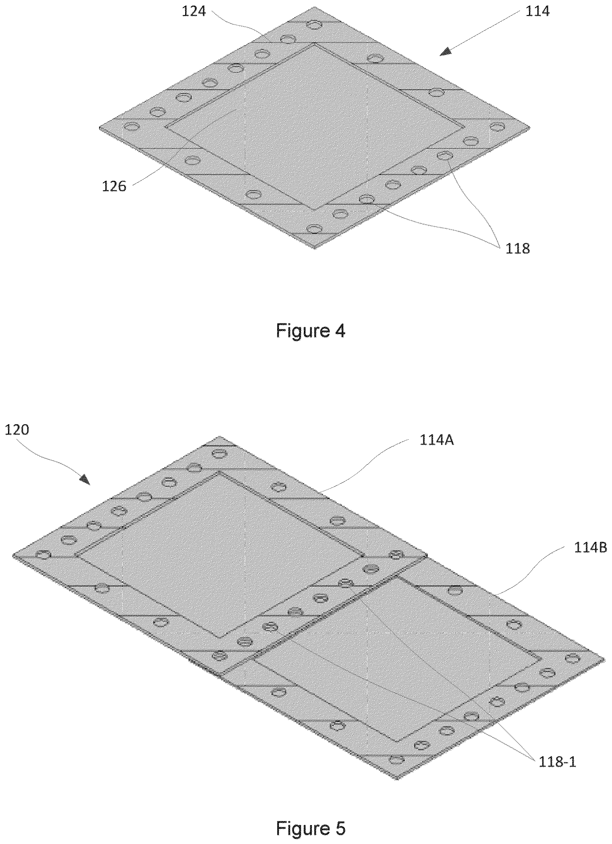

Two different embodiments of a gasket arrangement 122 will now be described, with reference to Figures 3b and 3c. In both of these exemplary embodiments, the gasket arrangement 122 includes a first member 124 and a second member 126, with the gasket arrangement 122 being arranged on a panel 114 for a sectional tank 100. In both Figures 4a and 4b, only a section of the panel 114 is shown for the purpose of illustrating the respective gasket arrangement 122-1, 122-2.

In the example shown in Figure 3b, the first member 124 is provided directly onto a mating surface 120 located along an edge of the panel 114-1. The second member 126 is arranged to cover the first member 124, at least in part, to provide a fluid-tight seal about the first member 124. The second member 126 preferably covers substantially the entire surface of the panel 114-1. The first member 124 may therefore be said to be positioned between the mating surface 120 (at least in part) and the second member 126.

In the example shown in Figure 3c, the second member 126 is arranged preferably to cover substantially the entire surface of the panel 114-2 prior to the first member 124 being provided on the mating surface 120. In other words, a layer of the second member is provided on the surface of the panel 114-2 before the first member 124 is provided (e.g. or applied) on the surface. Thus, the second member 126 is positioned between the mating surface 120 and the first member 124 such that the first member 124 is not in direct contact with the mating surface 120. The second member 126 is further arranged to cover the first member 124, at least in part, to provide a fluid-tight seal about the first member 124.

In both Figure 3b and 3c, only a section of panel 114 is shown. It should however be appreciated that the mating surface 120 may extend along one or more edges, or around the entire perimeter, of the panel 114.

The first member 124 may be arranged to be more deformable / compressible than the mating surface 120 of the panel 114 and less deformable / compressible than the second member 126 that covers it. The first member 124 may be a flat, elongate shape arranged to extend along an edge of the panel 114. The first member 124 may be formed of a foam-based material (such as a hard closed-cell PVC foam, for example) or it may be formed of another such `readily compressible' material.

The second member may be applied as a coating on the surface of the panel 114. The second member 126 is preferably arranged to cover substantially the entire surface of the panel 114. The second member 126 may be more deformable (e.g. compressible) than the panel 114. The second member 126 is arranged to cover the first member 124 so as to protect it from exposure to any fluids, or chemicals, etc. that it might otherwise be exposed to, for example when used with a storage tank 100. The second member 126 may be provided as an elastomeric coating, or similar, preferably formed from a material that is resistant to chemicals. Ideally, the second member 126 is arranged to be sufficiently flexible that it can be deformed under compression (e.g. when securing two panels 114 together) while maintaining a fluid-tight seal about the first member 124 without cracking, tearing, rupturing or otherwise losing its structural integrity.

Figure 4 is an exemplary embodiment of a panel 114 having a first member 124 provided on the mating surface 120 around the perimeter of the panel 114, and a second member 126, which in this example is an elastomeric coating, arranged to cover the entire surface of the panel 114, thereby sealing the first member 124 to provide a gasket arrangement 122.

Figure 5 illustrates how two panels 114A, 114B having a gasket arrangement 122 (as shown in Figure 4) may be joined together. The respective mating surfaces 120 are shown overlapping with the holes 118 of each panel 114A, 114B aligned such that the panels 114A, 114B can be secured together such that the gasket arrangement 122 provides a fluid-tight seal at the joint.

When the two panels 114A, 114B are secured together, the first member 124 of the gasket arrangement 122 is compressed such that it deforms to a greater extent than the second member 126, thereby acting as a gasket between the panels 114A, 114B to seal the join. The second member 126 is sufficiently flexible so that, when the gasket arrangement 122 is compressed, the second member 126 allows deformation of the first member 124 while maintaining the fluid-tight seal about the first member 124 without rupture. Thus, the second member 126 protects the first member 124 from coming into physical contact with the contents of the sectional tank or other contaminants, once constructed and in use.

Furthermore, the second member 126 protects the first member 124 from being dislodged, both when the two panels 114A, 114B are initially aligned and/or secured together, and when in use.

The gasket arrangement 122 may be used in a sectional tank 100 to provide perimeter seals and partition seals, preferably between adjacent panels 114. It should be understood that a gasket arrangement 122 on a panel 114 for constructing a "sectional tank" is simply a preferred embodiment.

### Panel for a sectional tank

Sometimes it is necessary to protect panels from corrosion, for example if used to construct a sectional tank intended to contain corrosive material. Protective coatings can enable the use of materials such as steel for the panels, which would otherwise suffer corrosion in use. Typically, a protective coating would be applied to the interior of a sectional tank after assembly, for this purpose. However, applying a coating after assembly adds a further step in the construction process, and thereby detracts from the intended convenience and ease of constructing a sectional tank.

Applying a glass enamel or epoxy coating to panels prior to assembly (for example in a central processing facility) of a sectional tank, or similar, may help to protect such panels against corrosion. Advantageously, these coatings can be applied to panels on a production line, rather than on site. However, whilst such glass enamel or epoxy coatings may offer protection against corrosion, they perform poorly when subjected to impact. Thus, the necessary handling and transport of coated panels can often result in damage to the coatings on one or more of the panels, causing exposure of the steel beneath which can lead to panel corrosion and eventual perforation and failure.

Furthermore, the application of glass enamel and epoxy coatings includes a heat curing step, and consequently the process of manufacture is relatively energy intensive. The coating materials for glass enamel and epoxy coatings are applied in liquid form and remain wet until heat cured. Typically, a base member of a panel is suspended from hooks and transported during the coating procedure (including applying the coating materials and heat curing). In the areas where the base member is in contact with the hooks the liquid coating materials are not or only poorly applied and hence the coating may fail to protect the base member in those regions. The portions of the panels that are inadequately coated can be protected against corrosion by the application of a sealant on site.

This process can however contribute to potential weakness / flaws in the anti-corrosion properties of the coating. Not only are the areas where a base member is in contact with the hooks poorly coated, but also the edges of a base member can be poorly coated as typically the liquid coating material is only applied on one face of a base member. If so, the edges also rely on protection via the application of a sealant on site, which offers inferior corrosion protection. In addition, the heat curing step required for glass enamel and epoxy coatings may make it difficult to repair easily, on site, any damage to a coating.

Instead of a glass enamel or epoxy coating, a coating of an elastomer, optionally a polyurethane or a polyurea or a polyurethane/polyurea hybrid, may be applied to a base member (e.g. an underlying substrate) to form a panel in which the base member is protected against corrosion. In particular, elastomeric polyurethane and/or polyurea coatings are advantageous as they can offer improved resistance to mechanical damage.

Furthermore, elastomeric polyurethane and/or polyurea coatings require no heat curing during manufacture and so better manufacturing energy efficiency is possible. Elastomeric polyurethane and/or polyurea have fast gel/cure times, which may be in the order of minutes or even seconds, for example, and as such is convenient for manufacture. Elastomeric coatings such as polyurethane and/or polyurea may additionally be suitable for hot spray application, which permits further reduction of the curing or gelling time. Hot spray applied elastomer coatings can provide particularly favourable physical properties as well. Due to the absence of a heat curing step and the short curing or gelling time for the coating, different areas of a base member of a panel may be coated consecutively for complete encapsulation of a sectional panel, or layers can be built up for a thicker coating.

For example, one side of a base member may be coated whilst the opposing side is held, for example by a magnetic lifter (in an embodiment having a magnetic base member); alternatively a base member may be held at a top-left region for a first coating, and then the same base member may be held at a bottom/right region for a second coating so that both the faces and all edges are fully encapsulated for favourable corrosion protection. The base members are completely encapsulated by the coating in a factory environment prior to transportation and assembly of a sectional tank, for example, on site. Sealant may still be used for assembly of the panels to construct the tank, though the sealant need not be relied upon to provide corrosion protection, but only to form a fluid or gas tight seal.

Should the panel coating become damaged, then the elastomeric coating can easily be repaired on site as no heat curing step is required. The repair can use the same coating material, applied by a spray, or by brush / roller, for example.

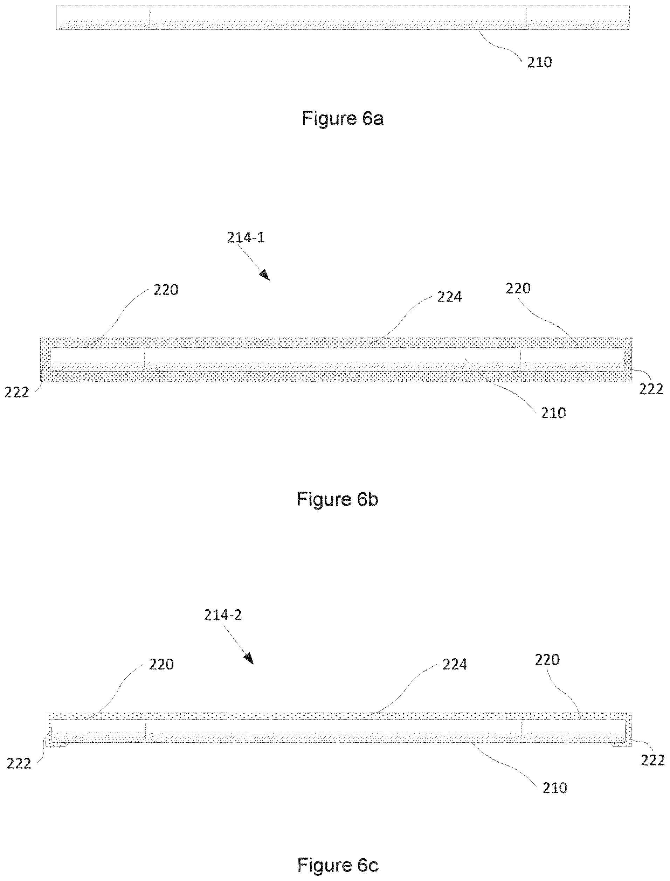

Figure 6a shows a base member 210 for forming a panel having an elastomeric coating. Figure 6b shows the base member 210 covered by an elastomeric coating 224 to form a panel 214-1. The elastomer may comprise a polyurethane and/or a polyurea. Only a section of the base member 210 is shown for the purpose of illustrating the elastomeric coating 224. In this example, the coating 224 fully encapsulates the base member 210. The coating 224 is thus provided on all surfaces of the base member 210, though only a section of base member 210 is shown. It should however be appreciated that the coating 224 may cover at least part of any or all surfaces of the base member 210.

The coating 224 may be provided directly on the surface of the base member 214. The coating 224 may be arranged to cover substantially the entire surface of the base member 210. The coating 224 is preferably arranged to cover at least part of the base member 210 so as to protect it from exposure to any fluids, or chemicals, etc. that it might otherwise be exposed to, for example when used with a storage tank 100.

The coating 224 is preferably more deformable (e.g. compressible) than the base member 210. The coating 224 may be formed from a material that is resistant to chemicals. Preferably, the coating 224 is arranged to be sufficiently flexible that it can be deformed under compression (e.g. when securing two panels 214 together) without cracking, tearing, rupturing or otherwise losing its structural integrity, for example to remain fluid-tight and prevent the ingress of fluid to the base member 210. This flexibility may also protect the coating from damage by impact.

Figure 6c is an alternative embodiment of a panel 214-2 comprising a base member 210 having a coating 224 provided on some but not all surfaces of the base member 210. In this example the coating 224 covers the entire upper surface that is to be an interior surface (which may therefore come into contact with corrosive materials), the edge surfaces, and some of the lower surface.

Figures 6b and 6c show the coating 224 extending beyond the (upper) surface of the panel 214 that is arranged to provide an internal surface of a sectional tank 100, once assembled. The coating 224 also covers a mating surface 220 of the base member 210 provided at or towards the edge of the base member 210, as well as the ends/edge surfaces 222 of the base member 210. When assembled, the mating surfaces 220 and the edge surfaces 222 may be obscured to some extent, depending on how the panel 214 is secured or joined to an adjacent panel (or framework). A coating 224 applied after assembly of the sectional tank 100 would fail to cover these obscured portions of the panel 110, and thus ingress of a corrosive fluid may occur past the join between adjacent panels to the uncoated portion of the base member.

In one example, the coating 224 may a polyurea (the reaction product of a polyisocyante component and an amine terminated resin blend). An example of a suitable pure polyurea for the coating is Polyshield HT-100F UB^{™} (an aromatic polyurea) from Specialty Products, Inc., Washington USA. The physical properties of a suitable pure polyurea coating are, for 1.7 mm coating thickness: tensile strength (ASTM D412) > 27.11 MPa; elongation at 25°C > 300%; Shore hardness (D) 55; modulus at 100% elongation (ASTM D412) > 11.13 MPa; modulus at 300% elongation (ASTM D412) > 24.32 MPa; tear resistance (ASTM D624) 84.57 kN/m. A suitable pure polyurea typically has a gel time of approximately 5 seconds, and is tack free after approximately 7 seconds.

In another example, the coating may be an elastomeric polyurethane/polyurea hybrid coating (the reaction product of a polyisocyante component and a resin blend component, where the resin blend is made up of blends of amine-terminated and/or hydroxyl-terminated polymer resins). In another example, the coating may be an elastomeric polyurethane. An example of an elastomeric polyurethane for the coating is Polibrid^{™} 705E from AkzoNobel. The physical properties of a suitable elastomeric polyurethane coating are, for 0.7 to 5 mm coating thickness: tensile strength (ASTM D12) > 19.3 MPa; elongation (ASTM D12) 43%; impact resistance (ASTM D2794) > 72.5kg (direct and reverse); Shore hardness (D) > 60. A suitable elastomeric polyurethane typically is touch dry after approximately 1 hour at 25°C or 2 hours at 15°C, and is hard dry after approximately 1 day at 25°C or 2 days at 15°C. Such an elastomeric polyurethane can be applied by brush or roller, or by airless spray. Due to the shorter gel time and the more favourable physical properties a pure polyurea coating or a polyurethane/polyurea hybrid coating is preferred over a pure elastomeric polyurethane coating.

The spray process (also referred to as `plural spray process') mixes separate resins or prepolymer components for example in a mixer block or by impingement in the spray gun. The benefit of spraying is that the time between mixing and application is minimal, and the materials can have a very short gel time, which means that after application the coating can be handled very quickly. Hot spraying further includes heating of the resins and/or mixture above ambient temperature. This can further minimise the gel time.

A typical hot spray procedure for a pure polyurea uses a prepolymer ratio of 1:1, a minimum pressure of 13.7 MPa (2000psi) (physical properties are enhanced when sprayed at higher pressures, e.g. 20.8 MPa (3000psi) or more) and heating up to 79°C (with pre-heater temperature 71-76°C and hose temperature 71-76°C). A typical hot spray procedure for an elastomeric polyurethane uses a pre-polymer ratio of 2:1 with an airless spray having at least 20.8 MPa (3000 psi) output pressure.

The base member 110, 210 of the panels 114, 214 may be formed from concrete or cement. Concrete (or cement) panels can be useful as they can be pre-cast into a desired shape relatively cheaply, enabling tailor-made panels that can be assembled on site to form the desired sectional tank. Conventionally concrete panels for sectional tanks can be coated on site, after assembly into a tank. For coating such concrete panels it is also known to use HDPE sheeting, which is typically laid into a mould for casting a panel. The sheeting has a profiled pattern on the back. On site, the HDPE of adjacent panels is joined together by welding a strip between the panels. Sealing the coating around pipe penetrations and small features can be problematic, and achieving a good fluid tight weld can be difficult to achieve and difficult to test.

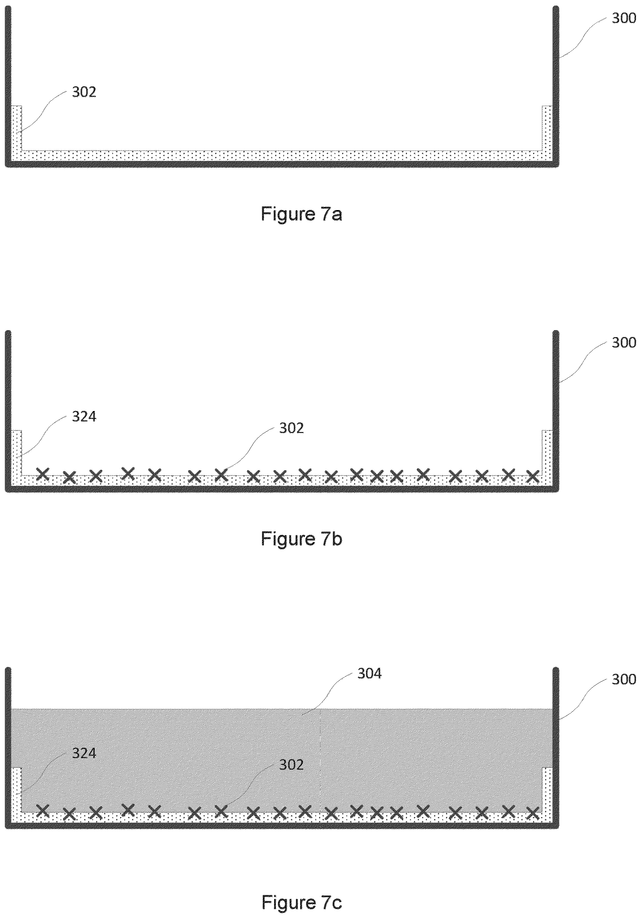

Thus, according to an embodiment, an elastomeric coating, as described above, may be provided on a concrete (or cement) base member to form a panel. The coated concrete panels can be produced as described now with reference to Figures 7a to 7c.

Figure 7a shows a cross section of a mould 300, typically of steel. The mould 300 is treated with release agent. A layer of coating material 324 is applied into the mould, for example by spaying as described above, before the concrete is poured. For a good concrete/coating bond one or more plastic or steel anchors are partially embedded in the wet resin before the coating gels.

Figure 7b shows a number of anchors 302 in the form of formations with cross-shaped profiles, where the formations 302 are about halfway embedded in the coating material 324. Once the coating material 324 has gelled concrete 304 is poured into the mould, as seen in Figure 7c. The adherence of the concrete 304 to the coating 324 is enhanced by the anchors 302.

On site when the coated concrete panels are installed to form a sectional tank, gaps between the panels are sealed by applying more of the coating material (in prepolymer resin form) to form a seamless bond between to the panels providing a fluid tight seal and also protecting the concrete substrate beneath. The seal can be tested for defects for example using a DC holiday spark tester.

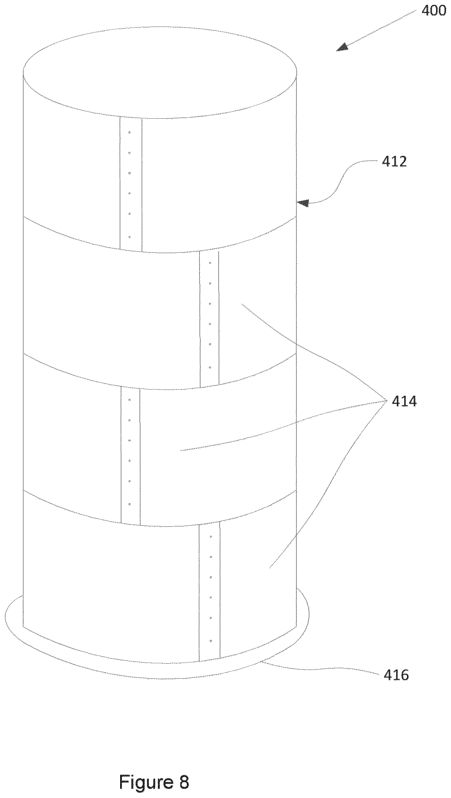

Figure 8 shows an example of cylindrical sectional tank 400 having an exterior wall 412 formed (or constructed) by a plurality of panels 414 mounted upon a base 416. The panels 414 may have an elastomeric coating as described herein and/or may be attached / joined using the gasket arrangement and/or method described herein. The panels 414 in this example will of course be curved, while retaining their generally rectangular shape. Of course, the panels and/or gasket arrangements described herein may be used in the construction of sectional tanks (on indeed other structures) of numerous, various, shapes and sizes while still providing the advantages described herein.

A relatively small sectional tank may for example have an internal volume of at least and/or approximately 1 m³ (cubic metre), which for a cubic tank requires generally square panels of approximately 1m x 1m dimensions, and for a fill with water for example a weight of over 1 metric ton. A sectional tank is typically larger than this, for example holding 5 m³, 8 m³, 10 m³, tens of cubic meters, hundreds of cubic meters, or over 1000 m³. The size of the panel may therefore vary depending on the size of the desired structure (e.g. tank) and/or the number of panels that are required to construct it. Thus, a panel as described herein may have a length (e.g. height) dimension in the range of between 1m to 5m, approximately, and a width (e.g. diameter) dimension in the range of between 1m to 5m, approximately. Of course, the panels are often rectangular, including square, but may be any other desired shape, preferably which shape allows for tessellation with other such panels.

In another example of a sectional tank (not shown), a skeletal framework may be provided, to which a plurality of panels are secured to construct a sectional tank.

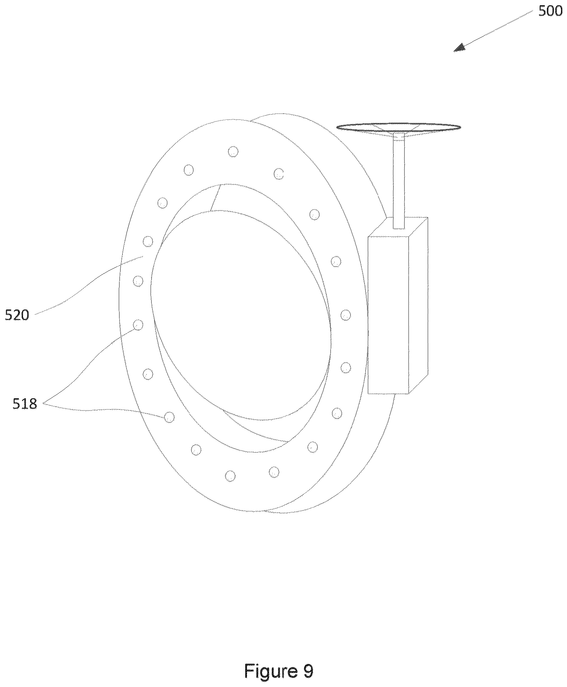

Figure 9 shows an example of a butterfly valve 500 that may be secured to a pipe (not shown), preferably wherein the valve 500 is arranged between two pipes. The gasket arrangement described herein may be provided on the mating surface 520 that is then secured to the end-flange of a pipe (not shown), which ideally has on its surface a similar gasket arrangement, using suitable securing means being provided through holes 518 to provide a fluid-tight seal. Of course, a similar gasket arrangement may also be used between two pipes, which are thereby directly joined together.

The gasket arrangement and methods described herein may also be used to join a pipe flange, for example, or indeed various other mating surfaces.

It should be understood that the embodiments described above are provided purely by way of example, and modifications of detail can be made within the scope of the invention.

Each feature disclosed in the description, and (where appropriate) the claims and drawings may be provided independently or in any appropriate combination. Reference numerals appearing in the claims are by way of illustration only and shall have no limiting effect on the scope of the claims.

### Clauses

The invention is further illustrated by the following clauses. The following clauses serve to illustrate the possibilities of combining different features of the invention in order to arrive at an embodiment according to the invention.
1. A gasket arrangement for providing a substantially fluid-tight seal between at least two corresponding mating surfaces in a sectional tank, the gasket arrangement comprising:
   a first member and a second member, the second member being arranged at least in part to provide a fluid-tight seal about the first member so as to inhibit fluid contact by fluid from within the sectional tank with the first member;
   wherein the second member is capable of deforming the first member while maintaining the fluid-tight seal when compressed.
2. The gasket arrangement of clause 1, wherein the first member is more compressible than the second member.
3. The gasket arrangement of clause 1 or 2, wherein the second member is arranged to be applied to the mating surface as a coating.
4. The gasket arrangement of any preceding clause, wherein the second member comprises an elastomeric material.
5. The gasket arrangement of any preceding clause, wherein the second member is arranged to completely cover the first member when provided on a mating surface.
6. The gasket arrangement of any preceding clause, wherein the second member is arranged to substantially encapsulate the first member.
7. The gasket arrangement of any preceding clause, wherein the second member has a thickness of less than 10mm, and preferably between 0.1mm and 10mm.
8. The gasket arrangement of any preceding clause, wherein the second member comprises at least one of: rubber, silicon, a resin, a polymer and an acrylic.
9. The gasket arrangement of any preceding clause, wherein the first member is arranged as a substantially elongate member.
10. The gasket arrangement of any preceding clause, wherein the first member is arranged as a strip member.
11. The gasket arrangement of any preceding clause, wherein the first member comprises at least one of: rubber; plastic; silicon; cork; graphite; resin; rubber; polyethylene; PTFE; neoprene; polystyrene; and polyurethane.
12. The gasket arrangement of any preceding clause, wherein the first member has a thickness of less than 20mm, and preferably between 0.1mm and 20mm.
13. A surface having provided thereon a gasket arrangement according to any preceding clause.
14. The surface of clause 13, wherein the second member is arranged as a coating on at least part of the surface, preferably wherein said at least part of the surface is arranged to be a mating surface, for example a surface arranged to be mated with another surface.
15. The surface of clause 13 or 14, wherein the second member is arranged as a coating that covers substantially the entire surface.
16. The surface of any of clauses 13 to 15, wherein the exposed surface of the second member is arranged such that it does not adhere to another surface, preferably wherein it does not readily-adhere to another surface, for example wherein the exposed surface of the second member does not exhibit adhesive properties.
17. The surface of any of clauses 13 to 16, wherein the first member is arranged on the surface such that it is covered by the second member.
18. The surface of clause 17, wherein the first member is adhered to the surface using a permanent adhesive, such that the first member cannot be removed from the surface without damaging the first member.
19. The surface of any of clauses 13 to 18, wherein the first member is arranged around at least a portion of the perimeter of the surface.
20. The surface of clause 19, wherein the first member is arranged around substantially the entire perimeter of the surface.
21. The surface of any of clauses 13 to 20, wherein a plurality of holes are provided through at least part of the surface for receiving securing means, for example bolts, for securing the surface to another surface having a corresponding plurality of holes.
22. A method of forming a gasket arrangement for providing a substantially fluid-tight seal between two corresponding mating surfaces in a sectional tank, the method comprising:
   arranging a first member and a second member on at least one of the mating surfaces, the second member being arranged at least in part to provide a fluid-tight seal about the first member so as to inhibit fluid contact by fluid from within the sectional tank with the first member;
   wherein the second member is capable of deforming the first member when compressed while maintaining the fluid-tight seal.
23. The method of clause 22, wherein the first member is more compressible than the second member.
24. The method of clause 22 or 23, wherein the second member is arranged as a coating on the mating surface.
25. The method of any of clauses 22 to 24, further comprising arranging the first member directly onto the mating surface prior to it being at least in part sealed by the second member.
26. The method of clause 25, further comprising adhering the first member directly to the mating surface prior to arranging the second member to at least in part provide a seal about it.
27. The method of clause 26, further comprising adhering the first member directly onto the mating surface using an adhesive that provides only a temporary adherence, and arranging the second member to at least in part provide a seal about the first member before the adhesive fails.
28. The method according to any of clauses 22 to 24, further comprising arranging the second member to cover the mating surface prior to arranging the first member on the mating surface.
29. A method of providing a substantially fluid-tight seal between two corresponding mating surfaces in a sectional tank, comprising:
   providing on a first mating surface a gasket arrangement according to any of clauses 1 to 12;
   aligning the first mating surface with the second mating surface; and
   compressing the first mating surface and second mating surface together, such that the first member of the gasket arrangement deforms to provide a substantially fluid-tight seal between the two surfaces.
30. The method of clause 29, further comprising securing the first mating surface to the second mating surface, preferably wherein the first mating surface and second mating surface each have a corresponding plurality of holes arranged to receive securing means therethrough, for example bolts, when the two mating surfaces are aligned.
31. A panel for a sectional tank, comprising a gasket arrangement or a surface according to any of clauses 1 to 21.
32. A panel for a sectional tank having a gasket arrangement formed by a method according to any of clauses 22 to 28.
33. A sectional tank comprising one or more panels according to claim 31 or 32.
34. A sectional tank constructed using a plurality of panels joined together using the method of clause 29 or 30, preferably wherein at least one of the panels is a panel according to clause 31 or 32.
35. A pipe having a surface according to any of clauses 13 to 21.
36.A valve arrangement having a surface according to any of clauses 13 to 21.
37. A door and doorframe arrangement comprising a surface according to any of clauses 13 to 21.
38. A panel for a sectional tank, the panel comprising a base member having an elastomeric coating.
39. The panel of clause 38, wherein the coating extends over at least one face surface of the base member and at least one edge surface of the base member.
40. The panel of any of clauses 38 or 39, wherein the base member is completely encapsulated by the coating.
41. The panel of any of clauses 38 to 40, wherein the elastomeric coating comprises a polyurethane or a polyurea or a polyurethane/polyurea hybrid elastomer.
42. The panel of any of clauses 38 to 41, wherein the coating is applied by a spray application, for example a hot spray application.
43. The panel of any of clauses 38 to 42, wherein a resin that forms the coating has, at room temperature, a gel time of less than 120 minutes.
44. The panel of any of clauses 38 to 43, wherein the base member comprises at least one of: fibreglass, plastic, concrete, cement and metal, preferably steel.
45. The panel of any of clauses 38 to 44, further comprising one or more anchor formations, where each anchor formation is partwise anchored in the coating and partwise anchored to the base member.
46. The panel of clause 45, wherein the one or more anchor formations comprise at least one of: plastic and steel.
47. The panel of any of clause 45 or 46, wherein the one or more anchor formations comprise a generally cruciform-shaped profile.
48. The panel of any of clauses 38 to 47, wherein the coating comprises a single layer of elastomer.
49. The panel of any of clauses 38 to 47, wherein the coating comprises multiple layers.
50. The panel of clause 49, wherein the multiple layers are of the same material.
51. The panel of any of clauses 38 to 50, wherein the coating has a thickness of between 0.1mm and 10mm.
52. A method of coating a panel for a sectional tank, comprising:
   providing a base member; and
   providing an elastomeric coating over at least part of the base member
53. The method of clause 52, wherein the elastomeric coating is provided by applying a resin to the base member that polymerises to form the elastomeric coating.
54. The method of clause 53, wherein the resin is applied by spraying.
55. The method of clause 54, wherein the resin is applied by hot spraying, preferably onto an unheated base member.
56. The method of any of clauses 54 to 55, wherein the resin is heated to a temperature between 65°C and 85°C.
57. The method of any of clauses 54 to 56, wherein the resin is subjected to pressure greater than atmospheric pressure, for example during curing.
58. The method of any of clauses 54 to 57, wherein the resin is applied to a first portion of the panel while the panel is held at a second portion, and wherein subsequently the resin is applied to at least the second portion while the panel is held elsewhere than the second portion.
59. The method of any of clauses 54 to 58, wherein the coated panel is further handled after application of the resin after less than 2 hours.
60. The method of any of clauses 52 to 59, wherein the elastomer is a polyurethane or a polyurea or a polyurethane/polyurea hybrid.
61. The method of any of clauses 54 to 60, wherein subsequent to application of the resin a further layer of resin is applied over the first layer.
62. The method of any of clauses 54 to 61, wherein subsequent to application of the resin further resin may be applied to repair damage to the coating.
63. A method of producing a sectional tank panel, comprising:
   applying a resin to a mould for a panel, wherein the resin is such that it polymerises to form an elastomer; and
   casting a panel from the mould.
64. The method of clause 63, further comprising partially embedding one or more anchor formations in the resin before the resin is polymerised.
65. The method of clause 64, wherein the one or more anchor formations comprise a cruciform-shaped profile.
66. The method of clause 64 or 65, wherein the one or more anchor formations comprise at least one of: plastic and steel.
67. The method of any of clauses 63 to 66, wherein the panel cast from the mould comprises a concrete base member having an elastomeric coating.
68. The method of any of clauses 63 to 67, wherein the elastomer is a polyurethane or a polyurea or a polyurethane/polyurea hybrid.
69. The method of any of clauses 63 to 68, further comprising treating the mould with release agent prior to applying the resin.
70. The method of any of clauses 63 to 69, further comprising applying further resin to form a seal between two adjacent panels.
71. A panel for a sectional tank produced according to the method of any of clauses 52 to 70.
72. A sectional tank comprising a gasket arrangement according to any of clauses 1 to 12 and/or at least one panel according to any of clauses 38 to 51 and Claim 71.
73. A butterfly valve comprising a gasket arrangement according to any of clauses 1 to 12.
74. A gasket arrangement substantially as described herein and as shown in the accompanying drawings.
75. A surface substantially as described herein and as shown in the accompanying drawings.
76. A panel for a sectional tank substantially as described herein and as shown in the accompanying drawings.
77. A method of producing a panel for a sectional tank substantially as described herein and as shown in the accompanying drawings.
78. A sectional tank substantially as described herein and as shown in the accompanying drawings.
79. A butterfly valve substantially as described herein and as shown in the accompanying drawings.

## Claims

1. A panel for a sectional tank, the panel comprising a base member having an elastomeric coating.

2. The panel of Claim 1, wherein the coating extends over at least one face surface of the base member and at least one edge surface of the base member.

3. The panel of Claim 1 or 2, wherein the base member is completely encapsulated by the coating.

4. The panel of any of Claims 1 to 3, wherein the elastomeric coating comprises a polyurethane or a polyurea or a polyurethane/polyurea hybrid elastomer.

5. The panel of any of Claims 1 to 4, wherein the coating is applied by a spray application, for example a hot spray application.

6. The panel of any of Claims 1 to 5, wherein a resin that forms the coating has, at room temperature, a gel time of less than 120 minutes.

7. The panel of any of Claims 1 to 6, wherein the base member comprises at least one of: fibreglass, plastic, concrete, cement and metal, preferably steel.

8. The panel of any of Claims 1 to 7, wherein the coating has a thickness of between 0.1mm and 10mm.

9. A method of coating a panel for a sectional tank, comprising:
providing a base member; and
providing an elastomeric coating over at least part of the base member

10. The method of Claim 9, wherein the elastomeric coating is provided by applying a resin to the base member that polymerises to form the elastomeric coating; preferably wherein the resin is applied by spraying; more preferably wherein the resin is applied by hot spraying, most preferably onto an unheated base member.

11. The method of Claim 10, wherein the resin is applied by spraying; preferably wherein the resin is applied by hot spraying, more preferably onto an unheated base member.

12. The method of Claim 11, wherein the resin is heated to a temperature between 65°C and 85°C.

13. The method of Claim 11 or 12, wherein the resin is subjected to pressure greater than atmospheric pressure, for example during curing.

14. The method of any of Claims 11 to 13, wherein the resin is applied to a first portion of the panel while the panel is held at a second portion, and wherein subsequently the resin is applied to at least the second portion while the panel is held elsewhere than the second portion.

15. The method of any of Claims 11 to 14, wherein subsequent to application of the resin a further layer of resin is applied over the first layer.
